Europäisches Patentamt

European Patent Office

Office européen des brevets

(19)

(11) Veröffentlichungsnummer: **0 009 005**
**B1**

(12)

# EUROPÄISCHE PATENTSCHRIFT

(45) Veröffentlichungstag der Patentschrift:
**24.03.82**

(51) Int. Cl.³: **B 62 B 5/02**, B 65 G 7/00

(21) Anmeldenummer: **79810082.2**

(22) Anmeldetag: **31.08.79**

(54) **Treppengängiges Transportgerät, insbesondere für Güter.**

(30) Priorität: **05.09.78 CH 9325/78**

(43) Veröffentlichungstag der Anmeldung:
**19.03.80 Patentblatt 80/6**

(45) Bekanntmachung des Hinweises auf die Patenterteilung:
- **24.03.82 Patentblatt 82/12**

(84) Benannte Vertragsstaaten:
**AT DE FR GB IT SE**

(56) Entgegenhaltungen:
**CH-A-266 260**
**CH-A-448 760**
**DE-U-1 750 679**
**FR-A-1 179 623**
**US-A-843 034**
**US-A-3 836 160**

(73) Patentinhaber: **CABO AG, Hermannswis 9,**
**CH-9443 Widnau (CH)**

(72) Erfinder: **Eicher, Josef, Eichholz 1108, CH-9436 Balgach**
**(CH)**

(74) Vertreter: **Bosshard, Ernst, Schulhausstrasse 12,**
**CH-8002 Zürich (CH)**

ACTORUM AG.

## Treppengängiges Transportgerät, insbesondere für Güter

Die Erfindung bezieht sich auf ein Transportgerät nach dem Oberbegriff des Patentanspruches 1.

Aus der CH-A Nr. 448760 ist ein Transportgerät gemäss dem Oberbegriff bekannt, bei dem verschwenkbare Arme zur Achsabstandsänderung zwischen vordern und hintern Rollen vorhanden sind. Infolge dieser beweglichen Anordnung der Arme führen diese während der Bewegung über die Treppe automatisch eine Schwenkbewegung aus. Als Folge des relativ langen starren Rahmens ist dieses Transportgerät in engen Treppenhäusern ungeeignet.

Die US-A Nr. 3836160 zeigt ebenfalls ein Transportgerät mit verstellbarem Achsabstand der Räder, wobei die Vorderräder eine automatische Schwenkbewegung ausführen. Die Kraftangriffsstellen zum Bewegen des Transportgerätes über Treppen liegen sehr ungünstig, da praktisch keine Hebelwirkung zustande kommt.

Ein mit Vorder- und Hinterrädern versehener Sackkarren geht aus der CH-A Nr. 266260 hervor. Für den Strassentransport sind die Hinterräder hochschwenkbar. Da insbesondere die Vorderräder relativ gross ausgebildet sind, ist dieses Gerät nur zum Transport über einzelne Stufen, nicht jedoch über Treppen geeignet.

Aus der US-A Nr. 843034 geht die Verwendung schwenkbarer Handhebel hervor. Die Räder sind hier an einem Armkreuz befestigt.

Die mit der Erfindung zu lösende Aufgabe besteht darin, ein von Hand schiebbares Transportgerät zu schaffen, mit dem sich Lasten über Treppen und in engen Treppenhäusern mit vergleichsweise geringem Kraftaufwand transportieren lassen.

Die Erfindung, mit der diese Aufgabe gelöst wird, ergibt sich aus dem Kennzeichen des Patentanspruches 1.

Dadurch ist es möglich, selbst relativ schwere Lasten von einem einzigen Mann über Treppen und Wege verhältnismässig einfach und mit vergleichsweise geringem Kraftaufwand zu transportieren.

In der Zeichnung sind Ausführungsbeispiele des Erfindungsgegenstandes dargestellt. Es zeigen:

Fig. 1 eine Seitenansicht des Transportgerätes,

Fig. 2 eine Draufsicht auf das Transportgerät,

Fig. 3 eine Seitenansicht des Transportgerätes im zusammengelegten Zustand,

Fig. 4 eine Draufsicht auf das zusammengelegte Transportgerät,

Fig. 5 das Transportgerät in schematischer Darstellung beim Besteigen einer Treppe in einer ersten Phase,

Fig. 6 das Transportgerät beim Besteigen einer Treppe in einer zweiten Phase,

Fig. 7 eine Seitenansicht des Transportgerätes mit einem aufgesteckten Rahmen, zum Transport langer Güter,

Fig. 8 eine Seitenansicht einer Ausführungsvariante des Transportgerätes, bei der die vorderen Rollen an schwenkbaren Armen befestigt sind,

Fig. 9 eine Seitenansicht des Transportgerätes nach Fig. 8 in einer anderen Position,

Fig. 10 eine Seitenansicht einer weiteren Ausführungsvariante des Transportgerätes mit zwei zusätzlichen Pneurädern,

Fig. 11 eine Ansicht des Transportgerätes gemäss Fig. 10 von hinten,

Fig. 12 einen Schnitt durch den Verstellmechanismus für die Pneuräder, und

Fig. 13 eine Ansicht einer Ausführungsvariante für die Verschwenkbarkeit der vorderen Rollen.

Das Transportgerät ist vorzugsweise für den Transport von Gütern bestimmt; es können mit ihm aber durch Anbringung einer Sitzgelegenheit auch gehbehinderte Personen befördert werden. Mit diesem von Hand gezogenen oder gestossenen Transportgerät lassen sich sowohl Säcke, Kisten als auch schwere Bürogeräte, Kühlschränke und Personen leicht von einem einzigen Mann auf Wegen sowie auch über Treppen befördern.

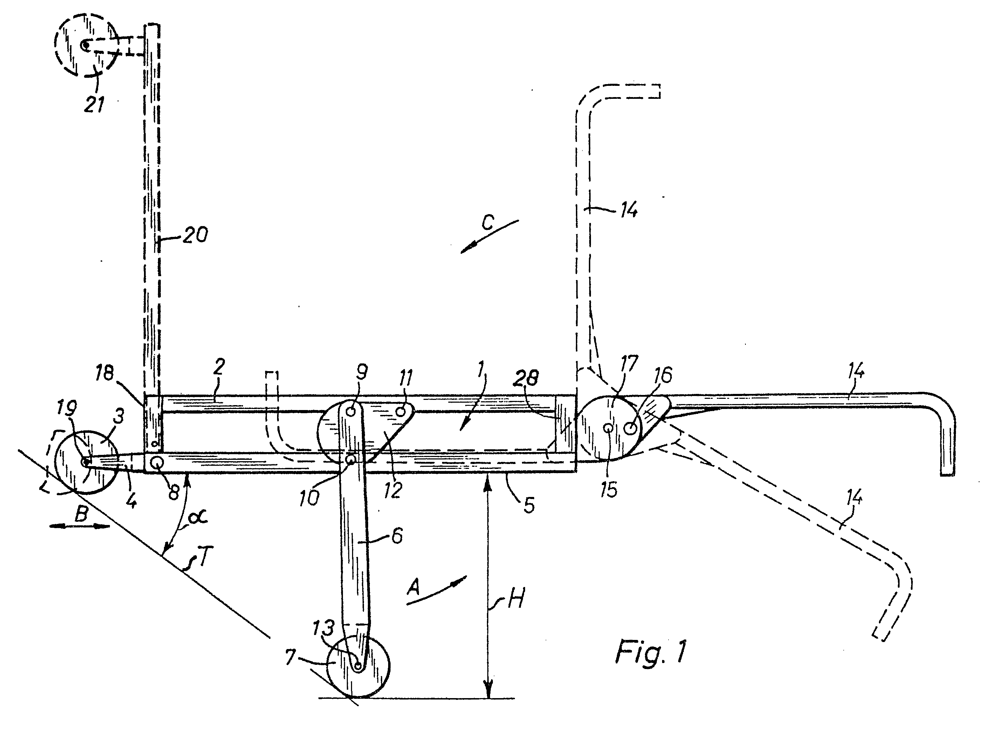

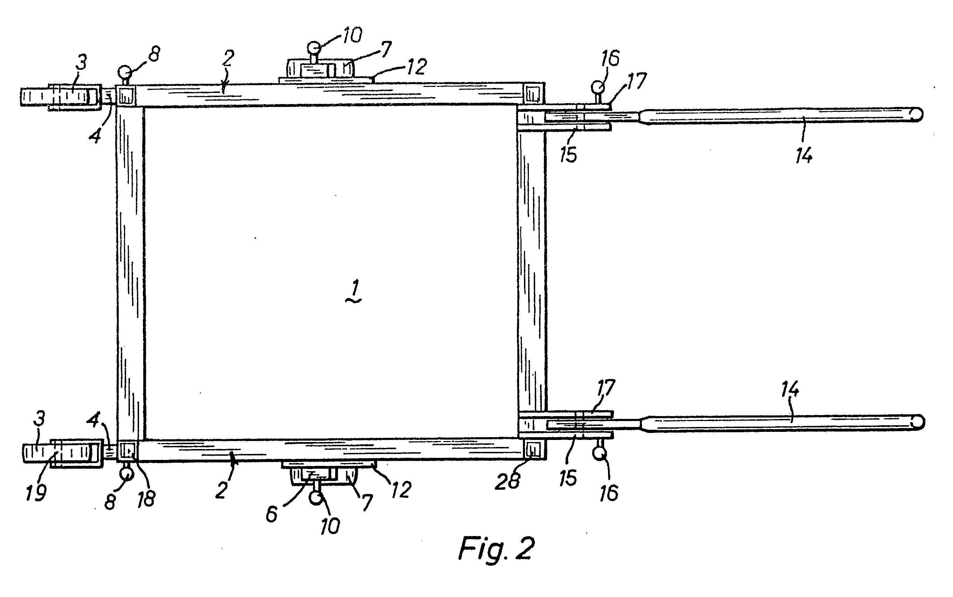

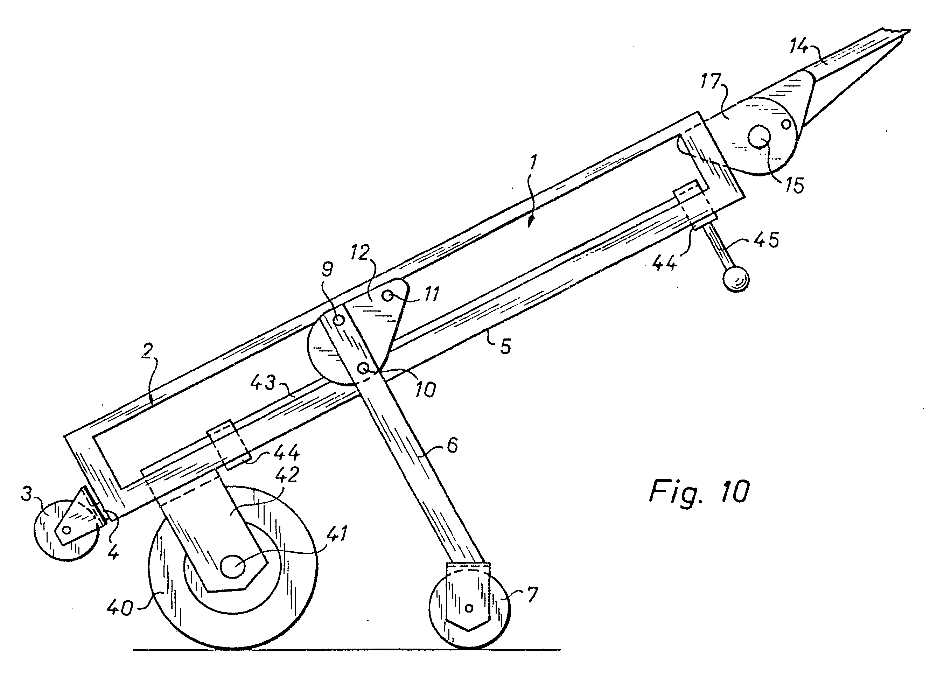

Das Transportgerät gemäss den Fig. 1 bis 4 enthält eine Ladebrücke 1 mit einem diese umgebenden Rahmen 2. Auf der Vorderseite der Ladebrücke 1 sind zwei drehbare Rollen 3 je an einer Stütze 4 befestigt, die parallel zur Ladebrücke in Richtung des Pfeiles B ausziehbar ist. Im mittleren Bereich der Ladebrücke 1 befindet sich aussen auf beiden Seiten je ein bezüglich des Bodens 5 der Ladebrücke 1 angenähert rechtwinklig abwärts ragender Arm 6 mit einer drehbaren Rolle 7 am unteren Ende. Die Befestigungsstelle der Arme 6 am Rahmen 2 befindet sich im Bereich des mittleren Drittels der Ladebrücke 1. Die Arme 6 können jedoch im untersten Teil etwas abgekröpft sein (s. Fig. 10), um besser unter auskragende Treppenstufen zu gelangen. Die um eine Achse 9 schwenkbaren Arme 6 werden in der in Fig. 1 dargestellten, abgesenkten Lage durch einen Bolzen 10 arretiert; durch Lösen des Bolzens 10 lassen sich diese Arme 6 in Richtung des Pfeiles A in eine Nichtbetriebslage hochschwenken. In dieser hochgeschwenkten Lage greift der Bolzen 10 in eine zweite Bohrung 11 eines mit dem Rahmen 2 verschweissten Haltebleches 12 ein. Die beiden vorderen Rollen 3 überragen die Vorderseite der Ladebrücke 1 und erstrecken sich unter den Boden 5 der Ladebrücke. Die aus einem Vierkantprofileisen bestehenden Stützen 4 erstrecken sich in ein gleiches Hohlprofil des Rahmens 2 hinein und sind in Richtung des Doppelpfeiles B einzeln ausziehbar. Als Ausführungsvariante könnte auch nur eine einzige Rolle 3 vorne in der Mitte der Ladebrücke angeordnet werden. Die Rollen 7 können auch mit Bremsen versehen sein.

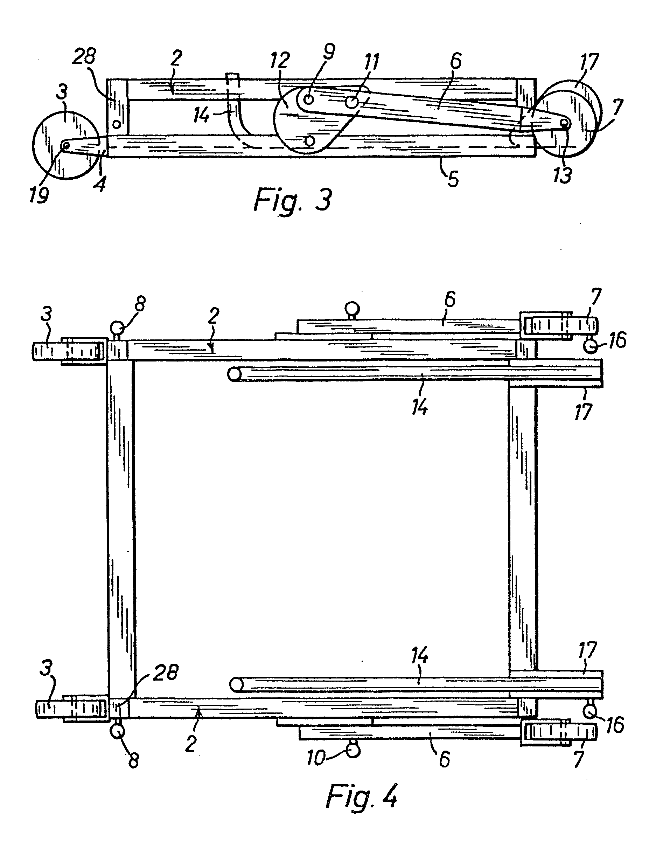

Am hinteren Ende der Ladebrücke 1 sind durch am Rahmen 2 angeschweisste Haltelaschen 17 zwei stangenartige nach hinten ragende Handhebel 14 je um eine horizontale Achse 15 schwenkbar gehalten. Durch einen in Bohrungen der Haltelasche 17 eingreifenden Bolzen 16 lassen sich diese Handhebel 14 in verschiedenen Schwenklagen arretieren, wie dies in den unterbrochenen Linien angedeutet ist. Im zusammengeklappten raumsparenden Zustand des Transportgerätes, gemäss den Fig. 3 und 4, können diese Handhebel 14 in das Innere der Ladebrücke 1 eingeklappt werden. Im eingeklappten Zustand überragen die Handhebel 14 die Länge der Ladebrücke 1 nicht.

Der Rahmen 2 ist so ausgebildet, dass die aufwärts ragenden Pfosten 18, 28 als hohle Vierkantprofilrohre 18 ausgebildet sind. In die beiden vorderen Pfosten 18 kann wahlweise eine Tragplatte 20 mit Rädern 21 eingesetzt werden. Die Tragplatte 20 enthält einen Metallrahmen, in welchen ein Brett oder dgl. eingesetzt ist. Diese wegnehmbar eingesetzte Tragplatte 20 verhindert, dass Lasten bei steiler Stellung des Transportgerätes vorne herausrutschen können. Die Arme 6 können auch längenveränderlich ausgeführt werden. Wie aus den Fig. 3 und 4 hervorgeht, lässt sich dieses Transportgerät auf engen Raum zusammenklappen, indem einerseits die aussen am Rahmen festgemachten Arme 6 in Richtung des Pfeiles A hochgeklappt und die auf der Innenseite des Rahmens befestigten Handgriffe 14 in Richtung des Pfeiles C eingeklappt werden. Dies ist insbesondere dadurch möglich, weil die Arme 6 nicht durch eine unten durchgehende Stange verbunden sind. Dadurch kann das Transportgerät im Nichtgebrauchszustand von Hand gut getragen werden und nimmt nur wenig Raum in Anspruch. Die Tragplatte 20 lässt sich aus den beiden Pfosten 18 herausziehen und als separaten Teil mitnehmen.

Damit dieses Transportgerät treppengängig ist, soll der Abstand a zwischen den Drehachsen der vorderen und hinteren Räder 3, 7 etwa 40 bis 70 cm, vorzugsweise 50 bis 60 cm, betragen. Die Bodenfreiheit H soll 30 bis 45 cm, vorzugsweise etwa 35 cm betragen. Ausserdem soll der Rollendurchmesser kleiner als 15 cm, vorzugsweise etwa 6 bis 9 cm, sein. Eine an die vorderen und hinteren Räder 3, 7 angelegte Tangente T soll mit dem Boden 5 einen Winkel zwischen 25 bis 50°, vorzugsweise 30 bis 40°, einschliessen, wobei die Stützen 4 ihre eingeschobene Lage einnehmen.

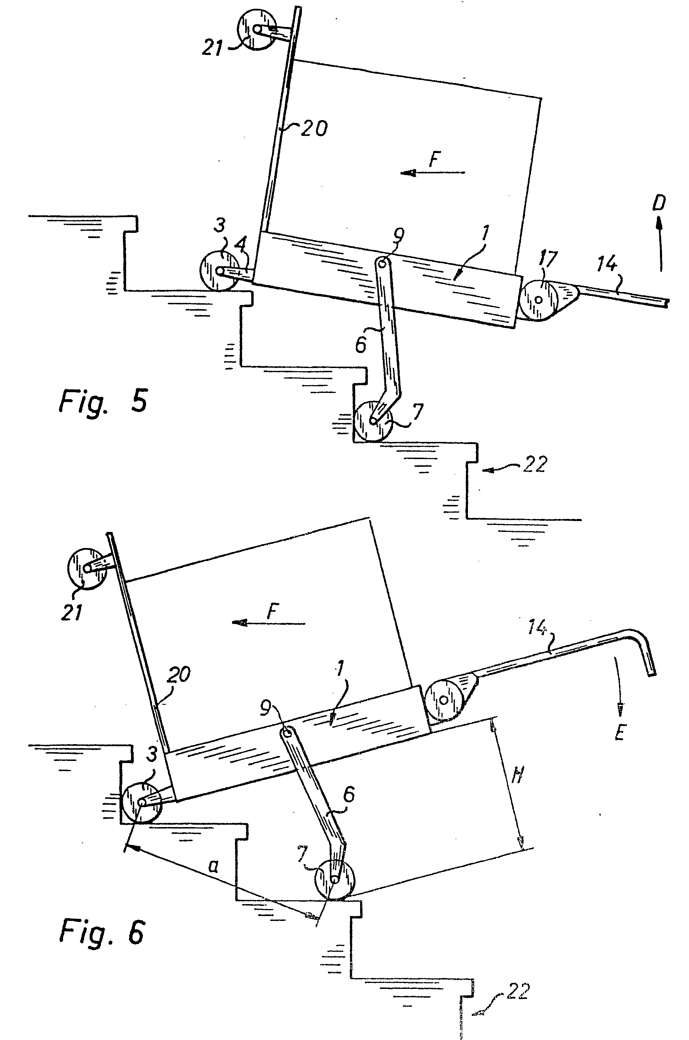

Wie aus Fig. 5 ersichtlich ist, wird das Transportgerät bei Treppen 22 mit den vorderen Rollen 3 auf eine obere Stufe zum Aufliegen gebracht. Die hinteren Rollen 7 liegen vorerst auf dem übernächst tieferen Tritt auf. Das Transportgerät wird soweit in Richtung des Pfeiles F verschoben, bis die hinteren Rollen 7 etwa an der Vertikalwand der nächsten Treppenstufe anstossen. Somit liegen sowohl die vorderen als auch die hinteren Rollen 3 und 7 gleichzeitig auf unterschiedlichen Treppenstufen auf. Je nach der Höhe und Tiefe der Stufen nimmt dabei die Ladebrücke 1 eine angenähert horizontale oder leicht nach hinten geneigte Lage ein. Hernach wird das Transportgerät durch Anheben von Hand an den Handhebeln 12 in Richtung des Pfeiles D angehoben und anschliessend in Richtung des Pfeiles F nach vorne bewegt, so dass schliesslich die in Fig. 6 dargestellte Lage entsteht. In dieser Position liegen die vorderen Rollen 3 auf einer oberen Treppenstufe und die hinteren Rollen 7 gleichzeitig auf der nächsttieferen Treppenstufe auf. Hernach wird das Transportgerät mit seinen Handhebeln 14 von Hand in Richtung des Pfeiles E nach unten gedrückt und sodann in Richtung des Pfeiles F geschoben, worauf wieder die in Fig. 5 dargestellte, aber um eine Stufe höhere Position entsteht. Auf diese Weise lässt sich das Transportgut auf einfache Weise unter Ausnützung der Hebelwirkung mit wenig Kraft eine Treppe hinauf bzw. herunter befördern.

Wenn das Transportgut auf einer horizontalen Fläche transportiert wird und somit die Rollen 3, 7 auf dem Boden aufliegen, nimmt die Ladebrücke eine nach hinten gerichtete Schräglage ein, mit einem Winkel α von vorzugsweise etwa 35°.

Normale Treppenstufen haben eine Höhe von etwa 18 cm und eine Tiefe von etwa 28 cm. Damit eine Anpassung des Gerätes an unterschiedliche Tiefen von Stufen erfolgen kann, sind die Stützen 4 mit den an ihnen befestigten Rollen 3 ausziehbar. In der gewählten Auszugslage erfolgt eine Arretierung durch einen Arretierungsbolzen 8, der in Bohrungen in den Stützen 4 eindringt. Beim Besteigen von Wendeltreppen ist es zweckmässig, die beiden Stützen 4 unterschiedlich weit auszuziehen.

Bei engen Platzverhältnissen, beispielsweise beim Einfahren in einen Lift oder dgl. lassen sich die Arme hochklappen und die Handhebel 14 in unterschiedliche Lagen bringen, wie dies beispielsweise in Fig. 1 durch unterbrochene Linien angedeutet ist.

Im zusammengelegten Zustand ist das ganze Transportgerät nur unwesentlich grösser als die eigentliche Ladebrücke 1 samt Rahmen 2.

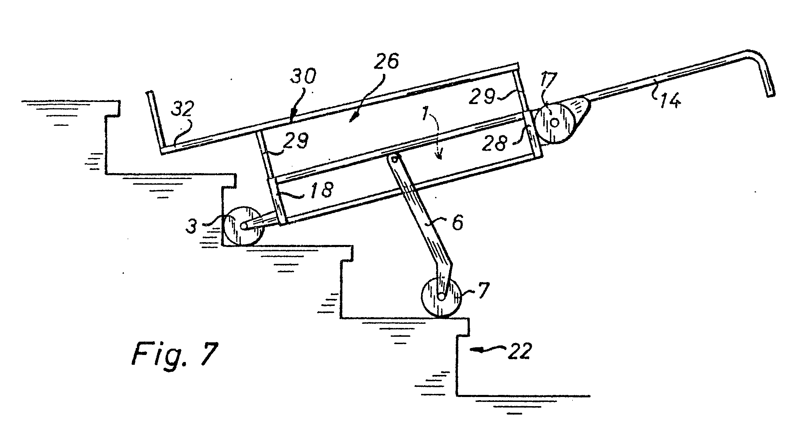

In Fig. 7 ist eine Ausführungsvariante des Transportgerätes dargestellt, bei der ein zusätzlicher Aufsteckrahmen 26 auf den Rahmen 2 aufgesteckt ist und sich besonders zum Transport langer Güter eignet. In die vier Eckpfosten 18, 28 des Rahmens 2 werden vier nach unten ragende Zapfen 29 lösbar eingesteckt, die oben mit einer plattenartigen Tragfläche 30 verbunden sind. Der vordere Teil 32 der Tragfläche überragt die vorderen Rollen 3 um etwa einen Viertel der Länge der Ladebrücke 1. Bei Nichtgebrauch kann der Aufsteckrahmen 26 als Ganzes entfernt werden.

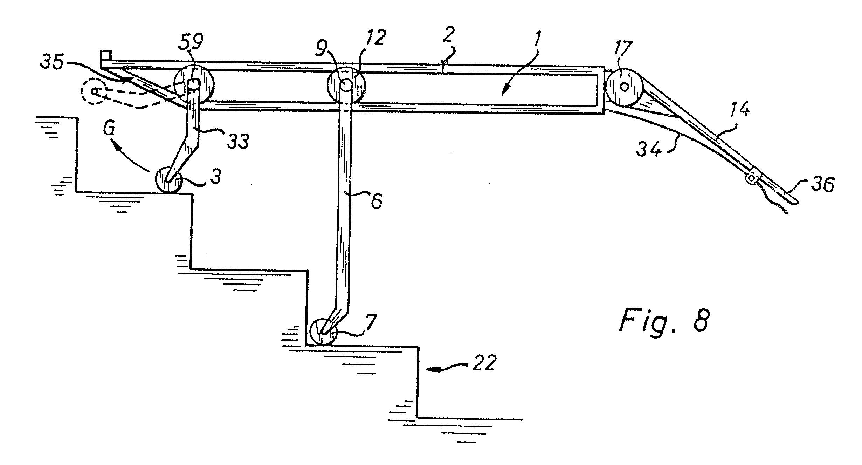

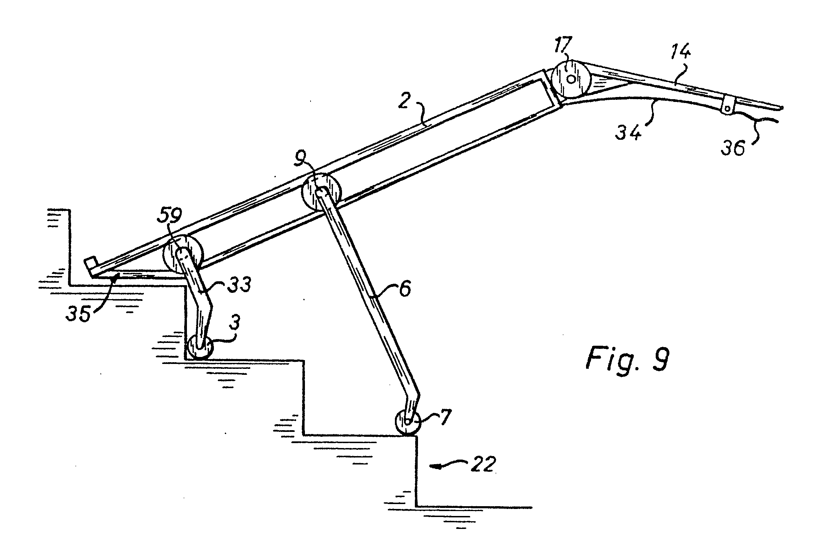

Die Fig. 8 und 9 zeigen eine weitere Ausführungsform des Transportgerätes, die vor allem für relativ grosse und schwere Güter bestimmt ist. Im Gegensatz zur Ausführungsform nach den Fig. 1 bis 7 sind hier die beiden vorderen Rollen 3 nicht ausziehbar, sondern an schwenkbaren Armen 33 befestigt. Diese werden in der in vollen Linien dargestellten, abgesenkten Lage arretiert. Durch einen Kabelzug 34 oder dgl. lässt sich die Arretierung von den Handgriffen 36 aus lösen, so dass sich die vorderen Arme in Richtung des Pfeiles G in die in unterbrochenen Linien dargestellte Lage hochschwenken lassen, in welcher sie gegen einen Anschlag anliegen. Die Arme 6 sind hier etwa um die Länge der Arme 33 länger als beim Ausführungsbeispiel nach den Fig. 1 bis 7. Der vorderste Teil der Ladebrücke 1 ist etwa 20° nach oben geneigt, so dass sich eine Nase 35 bildet, die das Auf- und Abladen der zu transportierenden Güter erleichtern und eine grössere Bewegungsfreiheit beim Anheben von einer Treppenstufe zur andern ermöglicht, wie dies aus Fig. 9 hervorgeht. Im übrigen entspricht der Aufbau und die Wirkungsweise dem erstbeschriebenen Ausführungsbeispiel.

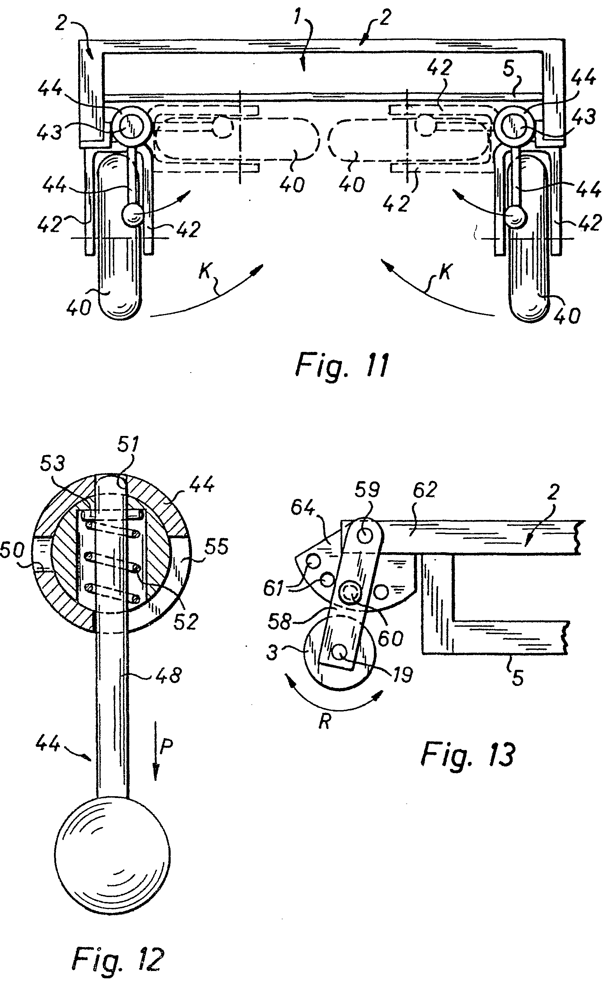

In den Fig. 10 und 11 ist eine Ausführungsform des Transportgerätes gezeigt, bei welchem — ausgehend vom Gerät nach den Fig. 1 bis 4 — zusätzlich zwei wahlweise zum Einsatz bringbare Pneuräder 40 vorhanden sind. Diese luftbereiften Pneuräder 40 haben einen wesentlich grösseren Durchmesser als die Räder 3 oder 7, also einen Durchmesser von etwa 15 bis 30 cm, vorzugsweise etwa 20 cm. Mit diesen Pneurädern 40 lassen sich Lasten auch über längere Strecken und über Unebenheiten weitgehend erschütterungsfrei transportieren. Die Radachse 41 wird je von einer Radgabel 42 abgestützt. Diese Radgabeln 42 sind je mit einer Stange 43 starr verbunden, die um etwa 90° schwenkbar ist. Die beiden zueinander parallel verlaufenden, unterhalb des Bodens 5 angeordneten Stangen werden durch am Rahmen 2 angeschweisste Ringe 44 oder Rohrstücke gehalten. Mit Hilfe je eines am hinteren Ende der Ladebrücke 1 angebrachten Rasthebels 45 können die Pneuräder verschwenkt werden, so dass sie eine Gebrauchslage — in Fig. 10 und 11 in vollen Linien eingezeichnet — oder eine Nichtgebrauchslage — in Fig. 11 in unterbrochenen Linien dargestellt — einnehmen können.

Wenn die Rasthebel 44 je um etwa 90° verschwenkt werden, bewegen sich die Pneuräder 40 gegeneinander in Richtung der Pfeile K, so dass sie hernach etwa parallel unterhalb des Bodens 5 liegen.

Wie aus Fig. 12 hervorgeht, arretiert der Rasthebel 44 die Stange 43 und damit die Pneuräder in der Gebrauchslage und in der Nichtgebrauchslage. Das Ende des Hebels 48 greift wahlweise in eine der zwei um etwa 90° versetzte Bohrungen 50, 51 ein und wird in der jeweiligen Lage durch den Druck einer Feder 52 gesichert, die gegen einen Stift 53 im Hebel 48 drückt. Durch eine Bewegung des Hebels 48 von Hand in Richtung des Pfeiles P rastet er aus der Bohrung 50 oder 51 aus und kann hernach in die andere Position verschwenkt werden. Der Hebel 48 ist in einem Schlitz 55 des Ringes 44 geführt.

In Fig. 13 ist eine Ausführungsvariante dargestellt, bei welcher die beiden vorderen Rollen statt auf Stützen 4 ausziehbar, auf schwenkbaren Stützen 58 am Rahmen 2 gehalten sind. Die Stützen 58 sind an der oberen Strebe 62 des Rahmens 2 durch je einen Bolzen 59 schwenkbar gehalten und lassen sich in Richtung des Doppelpfeiles R verschwenken, je nach den Abmessungen der vorhandenen Treppenstufen. Die Winkellage der Stütze 58 wird durch einen Arretierstift 60 festgelegt, der in eine von mehreren Bohrungen 61 eines mit dem Rahmen verschweissten Lochbleches 64 eingreifen kann. Auch hier erstreckt sich die Rolle 3 unterhalb des Bodens 5 und ist vor dem Rahmen angeordnet.

Eine weitere Variante besteht darin, dass die Stützen 58 in verschiedenen Winkellagen in das Lochblech 64 einsteckbar ist, wobei je nach der gewünschten Neigung der Stütze 58 unterschiedliche Bohrungen zum Einsatz kommen.

## Patentansprüche

1. Transportgerät mit einer Ladebrücke und zwei vorderen Rollen (3) im Bereich des vorderen Endes der Ladebrücke und mit zwei hinteren Rollen (7), wobei die hinteren Rollen (7) je an einem von der Ladebrücke (1) aus abwärts ragenden, beidseitig derselben angeordneten Armen (6) befestigt sind, die vorderen Rollen (3) je an einer verstellbaren Stütze (4, 33) befestigt sind, und die Ladebrücke beim Aufstellen des Transportgerätes auf einer horizontalen Fläche schräg nach hinten geneigt ist, der Abstand (a) zwischen vorderen und hinteren Rollen (3, 7) sowie die Rollendurchmesser so gewählt sind, dass die vorderen Rollen (3) beim Besteigen einer Treppe (22) auf ein und der selben Treppenstufe ruhen, während die hinteren Rollen (7) sowohl auf der nächsttieferen Stufe oder auf der übernächsttieferen Treppenstufe stehen können, dadurch gekennzeichnet, dass die Stützen (4, 33) und die Arme (6) für die Rollen (3, 7) bezüglich der Ladebrücke (1) und dem Rahmen (2) — beim Treppensteigen und beim normalen Fahren — unbeweglich sind und der Abstand zwischen den Drehachsen (13, 19) der vorderen und hinteren Rollen (3, 7) etwa 40 bis 70 cm, vorzugsweise 50 bis 60 cm, beträgt, der Durchmesser der Rollen (3, 7) kleiner als 15 cm ist und dass mit dem hinteren Ende des Rahmens (2) zwei einzeln schwenkbare und in verschiedenen Lagen arretierbare Handhebel (14) verbunden sind.

2. Transportgerät nach Anspruch 1, dadurch gekennzeichnet, dass der Winkel (α) zwischen einer an die Rollen (3, 7) angelegten Tangente (T) und dem Boden (5) der Ladebrücke (1) zwischen 25 und 50°, vorzugsweise 30 bis 40° beträgt und dass die Länge der Arme (6) und der Durchmesser der Rollen (7) so gewählt sind, dass die Bodenfreiheit (H) 25 bis 45 cm, vorzugsweise etwa 35 cm beträgt.

3. Transportgerät nach einem der beiden Ansprüche 1 oder 2, dadurch gekennzeichnet, dass die Stützen (4, 23) für die vorderen Rollen (3) winkelverstellbar sind.

4. Transportgerät nach einem der beiden Ansprüche 1 oder 2, dadurch gekennzeichnet, dass die vorderen Rollen (3) je an einem etwa parallel zum Boden (5) der Ladebrücke (1) einzeln ausziehbaren Arm (6) befestigt sind, wobei der Ausziehbereich 3 bis 30 cm beträgt.

5. Transportgerät nach einem oder mehreren der Ansprüche 1 bis 3, dadurch gekennzeichnet, dass die vorderen Rollen (3) die Ladebrücke (1) unten und vorne überragen.

6. Transportgerät nach einem oder mehreren der Ansprüche 1 bis 4, dadurch gekennzeichnet, dass die Arme (6) im Bereich des mittleren Drittels der Ladebrücke (1) schwenkbar befestigt sind, je auf der Aussenseite der Ladebrücke (1) angeordnet und um etwa 90° hochklappbar sind und die Länge der Handhebel (14) kürzer ist als die Länge der Ladebrücke (1) und sie auf die Innenseite der Ladebrücke (1) einschwenkbar sind (Fig. 3, 4).

7. Transportgerät nach einem oder mehreren der Ansprüche 1 bis 6, dadurch gekennzeichnet, dass der Rahmen (2) der Ladebrücke (1) am vorderen Ende mit Aufsteckorganen (18) versehen ist, zur wegnehmbaren Aufnahme einer mit Rollen (21) versehenen, etwa rechtwinklig zum Boden (5) der Ladebrücke verlaufenden Plattform (20) (Fig. 1).

8. Transportgerät nach einem oder mehreren der Ansprüche 1 bis 7, dadurch gekennzeichnet, dass der Rahmen (2) mit Aufnahmeorganen (18, 28) versehen ist zur wegnehmbaren Aufnahme eines die Ladebrücke (1) vorne überragenden Aufsteckrahmens (30), insbesondere zur Aufnahme langer Transportgüter (Fig. 7).

9. Transportgerät nach einem oder mehreren der Ansprüche 1 bis 3 und 6 bis 8, dadurch gekennzeichnet, dass die vorderen Rollen (3) an schwenkbaren Armen (33) befestigt sind, deren Arretierung von den Handhebeln (35) aus auslösbar ist und der vorderste Teil der Ladebrücke (1) eine spitzwinklige Nase (35) bildet (Fig. 8, 9).

## Claims

1. Conveying appliance with a loading platform and two front rollers (3) in the region of the front end of the loading platform and with two rear rollers (7), in which case the rear rollers (7) are each attached to an arm (6) projecting downwards from the loading platform (1) and arranged on both sides of the latter, the front rollers (3) each being attached to an adjustable support (4, 33) and, when the conveying appliance is placed on a horizontal surface, the loading platform is tilted obliquely rearwards, the distance (a) between the front and rear rollers (3, 7) as well as the roller diameter being selected such that, when mounting a staircase (22), the front rollers (3) rest on one and the same step, whereas the rear rollers (7) may rest both on the step below or on the next but one step below, characterised in that the supports (4, 33) and the arms (6) for the rollers (3, 7) are fixed with respect to the loading platform (1) and the frame (2) when mounting a staircase and during normal travel, that the distance between the spindles (13, 19) of the front and rear rollers (3, 7) amounts to approximately 40-70 cm, preferably to 50-60 cm, the diameter of the rollers (3, 7) is less than 15 cm, and that connected to the rear end of the frame (2) are two handles (14) which can be tilted individually and locked in different positions.

2. Conveying appliance according to claim 1, characterised in that the angle (α) between a tangent (T) to the rollers (3, 7) and the base (5) of the loading platform (1) amounts to between 25 and 50°, preferably to between 30 and 40°, and that the length of the arms (6) and the diameter of the rollers (7) are selected such that the ground clearance (H) amounts to 25-45 cm, preferably to approximately 35 cm.

3. Conveying appliance according to claim 1 or 2, characterised in that the supports (4, 33) for the front rollers (3) are able to be adjusted in an angular manner.

4. Conveying appliance according to claim 1 or 2, characterised in that the front rollers (3) are each attached to an arm (6) which can be extended individually parallel to the base (5) of the loading platform (1), the extension range amounting to 3-30 cm.

5. Conveying appliance according to one or more of claims 1 to 3, characterised in that the front rollers (3) project beyond the loading platform (1) downwards and forwards.

6. Conveying appliance according to one or more of claims 1 to 4, characterised in that the arms (6) are pivotally mounted in the region of the central third of the loading platform (1), are each arranged on the outside of the loading platform (1) and can be swung-up through approximately 90°, and that the length of the handles (14) is less than the length of the loading platform (1) and they can be retracted to the inside of the loading platform (1) (Figs. 3, 4).

7. Conveying appliance according to one or more of claims 1 to 6, characterised in that the frame (2) of the loading platform (1) is provided at the front end with extension members (18) for the removable mounting of a platform (20) provided with rollers (21) and extending approximately at right angles to the base (5) of the loading platform (Fig. 1).

8. Conveying appliance according to one or more of claims 1 to 7, characterised in that the frame (2) is provided with mounting members (18, 28) for the removable mounting of an extension frame (30) projecting forwards beyond the loading platform (1), in particular for receiving longer goods to be conveyed (Fig. 7).

9. Conveying appliance according to one or more of claims 1 to 3 and 6 to 8, characterised in that the front rollers (3) are attached to pivoting arms (33), which can be locked in position by the handles (35), and that the foremost part of the loading platform (1) forms an acute-angled projection (35) (Figs. 8, 9).

## Revendications

1. Chariot transporteur avec un plateau de chargement et deux roulettes avant (3), au voisinage de l'extrémité antérieure de celui-ci, et avec deux roulettes arrière (7), celles-ci étant fixées chacune à l'un des deux bras disposés de part et d'autre du plateau de chargement (1) et qui dépassent vers le bas, tandis que les roulettes avant (3) sont fixées chacune à un support (4, 33) réglable en position, que, lorsque le chariot repose sur une surface horizontale, le plateau est incliné vers l'arrière, et que la distance (a) entre les roulettes avant et arrière (3, 7) ainsi que le diamètre de celles-ci sont choisis de façon telle que, lorsqu'on monte un escalier (22), les roulettes avant (3) reposent sur la même et unique marche, alors que les roulettes arrière (7) peuvent prendre appui aussi bien sur la marche immédiatement inférieure que sur celle qui précède cette dernière, caractérisé en ce que les bras-supports (4, 33) et les bras (6) associés aux roulettes (3, 7) sont fixes par rapport au plateau (1) et au cadre (2) lorsqu'on monte un escalier et lors de la marche normale, en ce que l'écartement entre les axes de rotation (13, 19) des roulettes avant et arrière (3, 7) comporte une valeur comprise entre environ 40 et 70 cm, avantageusement entre 50 et 60 cm, en ce que le diamètre des roulettes (3, 7) est inférieur à 15 cm, et en ce qu'à l'extrémité arrière du cadre (2) sont reliés deux brancards à main (14) susceptibles individuellement de basculer et d'être bloqués à des positions différentes.

2. Chariot transporteur suivant la revendication 1, caractérisé en ce que l'angle ($\alpha$) entre une tangente (T) aux roulettes (3, 7) et le fond (5) du plateau de chargement (1) a une valeur comprise entre 25 et 50°, préférablement entre 30 et 40°, et en ce que la longueur des bras (6) et le diamètre des roulettes (7) sont choisis de manière telle que la hauteur libre (H) au-dessus du sol est de 25 à 45 cm, préférablement d'environ 35 cm.

3. Chariot transporteur suivant l'une des revendications 1 ou 2, caractérisé en ce que les bras-supports (4, 33) destinés aux roulettes avant (3) sont réglables angulairement.

4. Chariot transporteur suivant l'une des revendications 1 ou 2, caractérisé en ce que les roulettes avant (3) sont fixées chacune à un bras (6) susceptible de télescoper indivuduellement dans un sens à peu près parallèle au fond (5) du plateau (1), le domaine de télescopage étant de 3 à 30 cm.

5. Chariot transporteur suivant une ou plusieurs des revendications 1 à 3, caractérisé en ce que les roulettes avant (3) dépassent au-delà du plateau de chargement (1) vers le bas et vers l'avant.

6. Chariot transporteur suivant une ou plusieurs des revendications 1 à 4, caractérisé en ce que les bras (6) sont fixés à basculement dans la zone du tiers central du plateau de chargement (1), chacun de ces bras étant disposé sur le côté extérieur du plateau (1) et lesdits bras étant relevables d'environ 90°, tandis que la longueur des brancards (14) est inférieure à celle du plateau de chargement (1) et que ces brancards peuvent être rabattus contre la face antérieure de celui-ci (fig. 3, 4).

7. Chariot transporteur suivant une ou plusieurs des revendications 1 à 6, caractérisé en ce que le cadre (2) du plateau de chargement (1) est équipé à son extrémité avant d'organes embrochables (18) pour recevoir de façon amovible une plate-forme (20) pourvue de roulettes (21) et qui s'étend à peu près à angle droit par rapport au fond (5) du plateau (fig. 1).

8. Chariot transporteur suivant une ou plusieurs des revendications 1 à 7, caractérisé en ce que le cadre (2) est pourvu d'organes (18, 28) propres à recevoir de façon amovible un cadre embrochable (30) qui dépasse en avant du plateau de chargement (1), notamment pour prendre des charges à transporter de grande longueur (fig. 7).

9. Chariot transporteur suivant une ou plusieurs des revendications 1 à 3 et 6 à 8, caractérisé en ce que les roulettes avant (3) sont fixées à des bras basculants (33) dont le blocage peut être dégagé à partir des poignées (35) et en ce que la partie avant du plateau de chargement (1) constitue un nez (35) à angle aigu (fig. 8, 9).

Fig. 1

Fig. 2

0 009 005

Fig. 3

Fig. 4

11

Fig. 5

Fig. 6

Fig. 7

0 009 005

Fig. 8

Fig. 9

Fig. 10

Fig. 11

Fig. 12

Fig. 13